# EUROPÄISCHE PATENTSCHRIFT

(11) **EP 3 324 796 B1**
(45) Veröffentlichungstag und Bekanntmachung des Hinweises auf die Patenterteilung: **19.06.2019**
(21) Anmeldenummer: 16741009.1
(22) Anmeldetag: 19.07.2016
(51) Int. Cl.: A47J 31/36, A47J 31/44, A47F 1/08, A47J 47/16

(54) **KAFFEEAUTOMAT MIT EINEM KAPSELSPEICHER**
AUTOMATIC COFFEE MACHINE WITH CAPSULE STORAGE UNIT
MACHINE DE CAFÉ AUTOMATIQUE AVEC DISPOSITIF DE STOCKAGE DE CAPSULES

(30) Priorität: 24.07.2015 DE 102015214099
(43) Veröffentlichungstag der Anmeldung: 30.05.2018
(73) Patentinhaber: BSH Hausgeräte GmbH, 81739 München (DE)
(72) Erfinder: LUIPPOLD, Gregor, 82031 Grünwald (DE); MEJAC, Matej, 1431 Dol pri Hrastniku (SI); GNIELKA, Katja, 81371 München (DE); GOLCMAN, Damjan, 3327 Smartno ob Paki (SI); HABE, Mitja, 3320 Velenje (SI)
(86) Internationale Anmeldenummer: PCT/EP2016/067158
(87) Internationale Veröffentlichungsnummer: WO 2017/016928

(56) Entgegenhaltungen:
- CH-A2- 708 194
- DE-U1- 29 705 727
- DE-U1-202005 000 966
- DE-U1-202006 009 226
- DE-U1-202012 104 503
- FR-A1- 2 880 785

## Beschreibung

Die vorliegende Erfindung betrifft einen Kaffeeautomaten mit zumindest einem Kapselspeicher zum Speichern von übereinander angeordneten Kaffeekapseln.

Moderne Kaffeemaschinen verwenden zunehmend in einer Umverpackung eingeschlossenes Kaffeemehl in Form von Kaffeekapseln oder so genannten Kaffeepads, wodurch gewährleistet werden kann, dass der Kaffee aromadicht und langfristig ohne Qualitätsverlust gelagert werden kann. Derartige Kaffeekapseln werden aufgrund ihres Randes und ihrer damit einhergehenden T-förmigen Querschnittsform auch "T-discs" genannt. Zum Speichern derartiger Kaffeekapseln sind bereits eine Vielzahl unterschiedlicher Kapselspeicher bekannt, die üblicherweise separat zu einem Kaffeeautomaten an einer beliebigen Stelle in der Küche aufgestellt werden können.

Aus der Druckschrift DE 20 2006 009 226 U1 ist beispielsweise eine Kapselvorrichtung mit einem vertikal ausgerichteten, halbrunden Hohlkörperprofil bekannt, die zur Aufbewahrung und Ausgabe von Kapseln geeignet ist. Das Dokument CH-A2-708 194 zeigt einen Kaffeeautomat mit einem Kapselspeicher, der in dem Kaffeeautomat einsetzbar ist.

Die vorliegende Erfindung beschäftigt sich mit dem Problem, für einen Kaffeeautomaten einen Kapselspeicher mit einer verbesserte Ausführungsform anzugeben, die insbesondere eine deutliche Komfortsteigerung bietet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einen Kapselspeicher derart auszubilden, dass dieser einerseits entweder separat oder einfach in Kombination mit einem Kaffeeautomaten eingesetzt werden kann und andererseits eine leichte Entnahme einzelner Kaffeekapseln ermöglicht. Der Kapselspeicher des erfindungsgemäßen Kaffeeautomaten lagert dabei die in ihm angeordneten Kaffeekapseln übereinander und besitzt ein Gehäuse mit einem Rücken sowie zwei davon abgehende, gebogene Schenkel, die zusammen einen C-förmigen Querschnitt bilden. Die beiden Schenkel verjüngen sich dabei nach unten zum Rücken hin, wodurch die jeweils unterste Kaffeekapsel leicht aus dem Kapselspeicher entnommen werden kann, während die darüber angeordneten Kaffeekapseln noch durch die beiden Schenkel im Gehäuse zurückgehalten werden. Zudem ist an einem oberen Ende des Rückens eine als Haken ausgebildete Haltekontur angeordnet, über welche der erfindungsgemäße Kapselspeicher einfach mit einem Kaffeeautomaten verbunden und an diesem fixiert werden kann. Der erfindungsgemäße Kapselspeicher ermöglicht somit einerseits eine leichte Entnahme einzelner Kaffeekapseln und bietet andererseits die Möglichkeit, diesen entweder separat zu einem Kaffeeautomaten aufzustellen oder zu verwenden oder aber mit diesem zu verbinden, wodurch die Kaffeekapseln stets direkt am Verbrauchsort vorgehalten werden können.

Bei einer vorteilhaften Weiterbildung der erfindungsgemäßen Lösung berühren sich die beiden Schenkel an ihren freien Enden über die gesamte Höhe des Kapselspeichers nicht und ermöglichen dadurch einen Sehschlitz auf die im Kapselspeicher gespeicherten Kaffeekapseln. Hierdurch ist es problemlos möglich, zu sehen, ob und wie viel Kaffeekapseln noch im Kapselspeicher vorhanden sind bzw. sofern Kaffeekapseln mit unterschiedlichem Kaffee im Kapselspeicher angeordnet sind, welche Sorte von Kaffee die nächste unten am Kapselspeicher zu entnehmende ist. Durch diesen Sehschlitz kann darüber hinaus bei einem Verklemmen oder Verkanten einzelner Kaffeekapseln im Gehäuse mit einem entsprechenden Werkzeug, beispielsweise einem Kaffeelöffel, leicht Abhilfe geschaffen werden.

Bei einer vorteilhaften Weiterbildung der erfindungsgemäßen Lösung ist das Gehäuse aus Metall, insbesondere aus Edelstahl oder aus Aluminium, ausgebildet. Hierdurch kann ein Kapselspeicher mit einer vergleichsweise hohen Qualität und einer hohen ästhetischen Anmutung geschaffen werden. Selbstverständlich ist alternativ auch die Ausbildung des Kapselspeichers aus Kunststoff möglich, wodurch eine vergleichsweise große Freiheit hinsichtlich der Form- und Farbgebung ermöglicht wird.

Zweckmäßig weist das Gehäuse des Kapselspeichers einen Boden auf, der vom Rücken weg ansteigt. Der Boden ist somit leicht zum Rücken hin geneigt, was die Entnahme der einzelnen Kaffeekapseln erheblich erleichtert.

Die vorliegende Erfindung beruht auf dem allgemeinen Gedanken, einen Kaffeeautomaten mit zumindest einem derartigen und zuvor beschriebenen Kapselspeicher auszustatten, wobei der Kaffeeautomat im Randbereich einer oberen Abdeckung eine zumindest teilweise umlaufende Rinne aufweist. Da die Haltekontur am Kapselspeicher als Haken ausgebildet ist, kann durch ein Eingreifen des Hakens in die Rinne der Kapselspeicher zuverlässig und sicher am Kaffeeautomaten gehalten werden.

Durch die Ausbildung der kaffeeautomatenseitigen Rinne, die zumindest teilweise umlaufend angeordnet ist, kann für die Positionierung des Kapselspeichers am Kaffeeautomaten eine nahezu frei bestimmbare Stelle ausgewählt werden, wodurch besonders flexibel auf individuelle Raumbedingungen in einer Küche reagiert werden kann. Durch eine derartige Verbindung zwischen dem Kapselspeicher und dem Kaffeeautomaten über einen in eine Rinne am Kaffeeautomaten eingreifenden Haken, kann auch eine Montage bzw. Demontage des Kapselspeichers am Kaffeeautomaten äußerst einfach gehalten werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung, wie in den beigefügten Ansprüchen defininiert zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht von vorne auf einen erfindungsgemäßen Kapselspeicher,
- Fig. 2: eine Schnittdarstellung durch einen Kapselspeicher mit einer Halteeinrichtung zu Befestigung an einer Wand (nicht erfindungsgemäß),
- Fig. 3: einen Kaffeeautomaten mit einem daran angeordneten Kapselspeicher gemäß den Fig. 1 und 2,
- Fig. 4: eine Detaildarstellung der Anbindung des Kapselspeichers an den Kaffeeautomaten,
- Fig. 5: eine Ansicht von oben auf den erfindungsgemäßen Kaffeeautomaten mit unterschiedlichen möglichen Positionen zur Anordnung des Kapselspeichers.

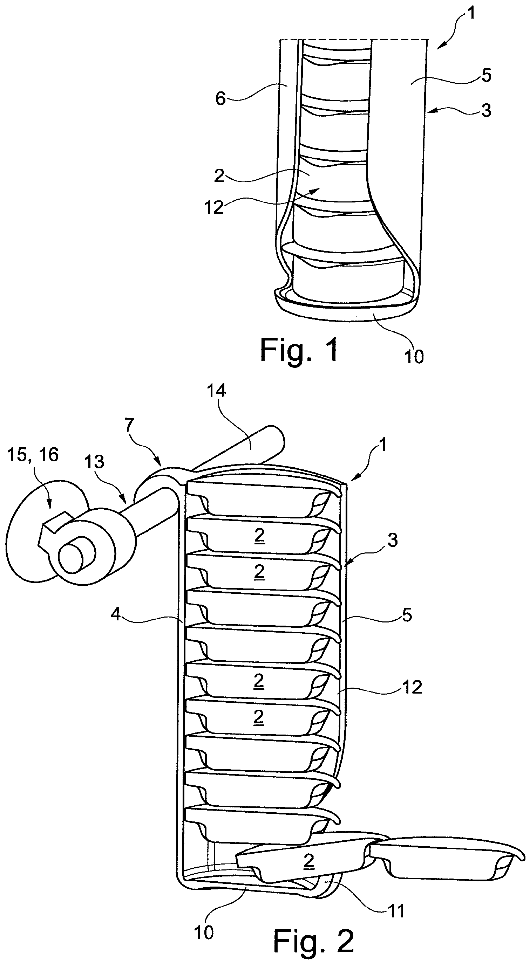

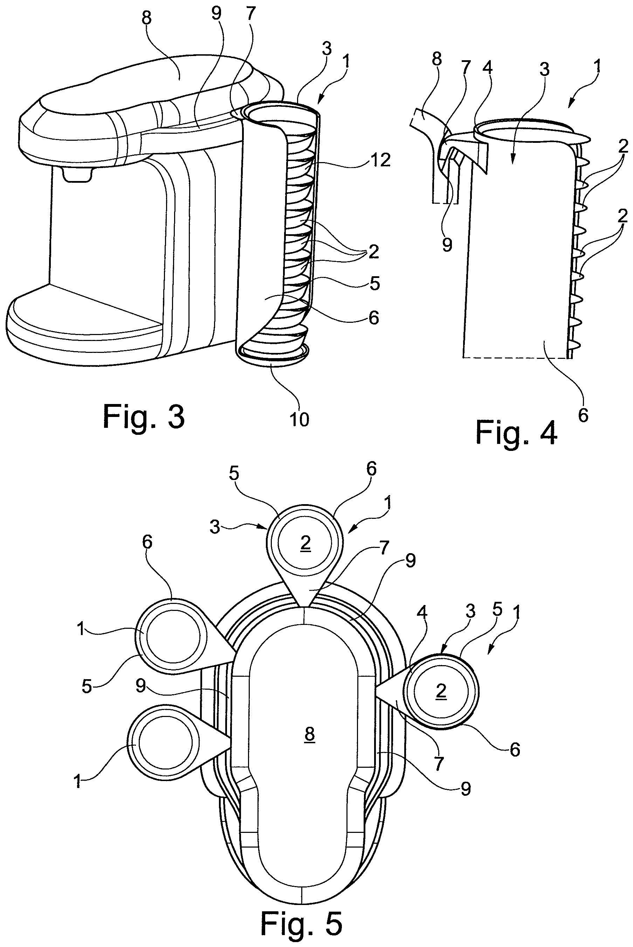

Entsprechend den Fig. 1 und 2, weist ein erfindungsgemäßer Kapselspeicher 1 zum Speichern von übereinander angeordneten Kaffeekapseln 2, sogenannten Kaffeepads, ein Gehäuse 3 mit einem Rücken 4 und zwei davon abgehenden, gebogenen Schenkeln 5 und 6 auf. Die beiden Schenkel 5, 6 bilden zusammen mit dem Rücken 4 einen C-förmigen Querschnitt, wobei sich die beiden Schenkel 5, 6 nach unten zum Rücken 4 hin verjüngen bzw. zurücknehmen, so dass die jeweils unterste Kaffeekapsel 2 aus dem Kapselspeicher 1 entnehmbar ist, während die darüber angeordneten Kaffeekapseln 2 noch durch die beiden Schenkel 5, 6 im Gehäuse 3 zurückgehalten werden. Der erfindungsgemäße Kapselspeicher 1 kann dabei separat an beliebiger Stelle aufgestellt werden oder aber über eine Haltekontur 7 (vergleiche die Fig. 3 bis 5) an einem Kaffeeautomaten 8 fixiert werden. Hierzu ist die Haltekontur 7 als Haken ausgebildet (vergleiche insbesondere die Fig. 3 und 4), während am Kaffeeautomaten 8 im Randbereich einer oberen Abdeckung eine zumindest teilweise umlaufende Rinne 9 angeordnet ist, in welche der Kapselspeicher 1 mit seiner Haltekontur 7, das heißt dem Haken, eingreift. Aufgrund des Umstandes, dass die Rinne 9, wie dies gemäß der Fig. 5 gezeigt ist, bis auf den vorderen Bereich des Kaffeeautomaten 8 vollständig umlaufend an diesem angeordnet ist, kann der Kapselspeicher 1 an einer hier nahezu frei wählbaren Position angeordnet werden.

Betrachtet man die Fig. 1, 3 und 4, so kann man erkennen, dass sich die beiden Schenkel 5, 6 an ihren freien Enden über die gesamte Höhe des Kapselspeichers 1 nicht berühren und dadurch einen Sehschlitz 12 auf die im Kapselspeicher 1 gespeicherten Kaffeekapseln 2 ermöglichen. Durch den Sehschlitz 12 ist es auch möglich, beispielsweise verkantete Kaffeekapseln 2 zu bewegen. Das Gehäuse 3 des erfindungsgemäßen Kapselspeichers 1 ist dabei vorzugsweise aus Metall, insbesondere aus Edelstahl oder aus Aluminium, ausgebildet und verleiht dadurch dem Kapselspeicher 1 ein hochwertiges Aussehen. Alternativ kann auch vorstellbar sein, dass der Kapselspeicher 1 bzw. dessen Gehäuse 3 aus Kunststoff ausgebildet ist.

Betrachtet man nochmals die Fig. 5, so kann man erkennen, dass insgesamt vier Kapselspeicher 1 mit ihrer jeweiligen Haltekontur 7 in die kaffeeautomatenseitige Rinne 9 eingreifen und damit am Kaffeeautomaten 8 gehalten sind. Selbstverständlich ist es dabei üblich, nicht mehrere derartiger Kapselspeicher 1 am Kaffeeautomaten 8 zu befestigen, sondern lediglich einen, wobei die Darstellung in Fig. 5 lediglich aufzeigen soll, dass eine Anordnung des Kapselspeichers 1 am Kaffeeautomaten 8 aufgrund des Nut- und Federprinzips an einer nahezu frei wählbaren Stelle mit Ausnahme des vorderen Bereichs, in welchem Kaffee ausgegeben wird, möglich ist. Auch kann die Anordnung bzw. die Position des Kapselspeichers 1 am Kaffeeautomaten 8 vergleichsweise einfach, beispielsweise durch ein Entlangschieben der Haltekontur 7 in der Rinne 9, verändert werden. Natürlich können auch mehrere Kapselspeicher 1 am Kaffeeautomaten 8 fixiert werden, insbesondere, wenn unterschiedliche Kaffees in unterschiedlichen Kaffeekapseln 2 vorgehalten werden sollen.

Betrachtet man nochmals die Fig. 2, so kann man erkennen, dass das Gehäuse 3 des Kapselspeichers 1 einen Boden 10 aufweist, der vom Rücken 4 weg ansteigt. Alternativ kann auch eine Schräge 11 vorgesehen sein, die eine vergleichsweise einfache Kapselentnahme ermöglicht.

Gemäß der Fig. 2 ist eine Halteeinrichtung 13 mit einer Haltestange 14 in der Art einer Reling (nicht erfindungsgemäß) und einem darin über seine Haltekontur 7, konkret seinem Haken, eingehängten Kapselspeicher 1 gezeigt. Dabei kann der Kapselspeicher 1 entlang der Haltestange 14 beliebig verfahren werden. Die Haltestange 14 selbst kann über beispielsweise längsendseitig der Haltestange 14 angeordnete Fixiereinrichtungen 15 mit Saugnäpfen 16 an einer Wand, insbesondere an einer Schrankwand oder einer gefliesten Küchenwand, befestigt oder sogar aufgehängt werden. Selbstverständlich können die Fixiereinrichtungen 15 auch mit der Wand verschraubt werden. Die Lösung mit den Saugnäpfen 16 bietet jedoch den großen Vorteil, dass die Halteeinrichtung 13 jederzeit wieder problemlos entfernt und an anderer Stelle wieder an einer Wand befestigt werden kann.

Mit dem erfindungsgemäßen Kapselspeicher 1 und dem zugehörigen Kaffeeautomaten 8 lässt sich somit einerseits eine vergleichsweise einfache und einzelne Kaffeekapselentnahme realisieren, wobei der Kapselspeicher 1 zudem wahlweise direkt am Kaffeeautomaten 8, das heißt direkt am Verbrauchsort, oder aber an beliebiger anderer Stelle angeordnet bzw. aufgestellt werden kann.

### Bezugszeichenliste

- 1: Kapselspeicher
- 2: Kaffeekapsel
- 3: Gehäuse
- 4: Rücken
- 5: Schenkel
- 6: Schenkel
- 7: Haltekontur
- 8: Kaffeeautomat
- 9: Rinne
- 10: Boden
- 11: Schräge
- 12: Sehschlitz
- 13: Halteeinrichtung
- 14: Haltestange
- 15: Fixiereinrichtung
- 16: Saugnapf

## Patentansprüche

1. Kaffeeautomat (8) mit zumindest einem Kapselspeicher (1) zum Speichern von übereinander angeordneten Kaffeekapseln (2) mit einem Gehäuse (3) mit einem Rücken (4) und zwei davon abgehenden, gebogenen Schenkeln (5,6), die zusammen einen C-förmigen Querschnitt bilden und die Kaffeekapseln (2) umgreifen, **dadurch gekennzeichnet, dass** sich die beiden Schenkel (5,6) nach unten zum Rücken (4) hin verjüngen, sodass die jeweils unterste Kaffeekapsel (2) aus dem Kapselspeicher (1) entnehmbar ist, während die darüber angeordneten Kaffeekapseln (2) noch durch die beiden Schenkel (5,6) im Gehäuse (3) zurückgehalten werden, und, dass an einem oberen Ende des Rückens (4) eine Haltekontur (7) zum Fixieren des Kapselspeichers (1) an dem Kaffeeautomaten (8) angeordnet ist, wobei der Kaffeeautomat (8) im oberen Randbereich eine zumindest teilweise umlaufende Rinne (9) aufweist, die komplementär zu der als Haken ausgebildeten Haltekontur (7) des Kapselspeichers (1) ausgebildet ist, so dass durch ein Eingreifen des Hakens in die Rinne (9) der Kapselspeicher (1) am Kaffeeautomaten (8) gehalten ist.

2. Kaffeeautomat (8) nach Anspruch 1, **dadurch gekennzeichnet, dass** sich die beiden Schenkel (5,6) an ihren freien Enden über die gesamte Höhe des Kapselspeichers (1) nicht berühren und dadurch einen Sehschlitz (12) auf die im Kapselspeicher (1) gespeicherten Kaffeekapseln (2) ermöglichen.

3. Kaffeeautomat (8) nach Anspruch 1 oder 2, **dadurch gekennzeichnet, dass** das Gehäuse (3) aus Metall, insbesondere aus Edelstahl oder aus Aluminium, ausgebildet ist.

4. Kaffeeautomat (8) nach einem der Ansprüche 1 bis 3, **dadurch gekennzeichnet, dass** das Gehäuse (3) einen Boden (10) aufweist, der vom Rücken (4) weg ansteigt oder eine Schräge (11) aufweist.

## Claims

1. Automatic coffee machine (8) with at least one capsule storage unit (1) for storing coffee capsules (2) arranged one above the other with a housing (3) with a rear (4) and two curved limbs (5, 6) protruding therefrom, which together form a C-shaped cross-section and which encompass the coffee capsules (2), **characterised in that** the two limbs (5, 6) taper downward toward the rear (4), so that the respective lowermost coffee capsule (2) can be removed from the capsule storage unit (1), while the coffee capsules (2) arranged thereabove are still retained in the housing (3) by means of the two limbs (5, 6), and that a holding contour (7) for fixing the capsule storage unit (1) on the automatic coffee machine (8) is arranged on an upper end of the rear (4), wherein the automatic coffee machine (8) has an at least partially peripheral channel (9) in the upper edge region, which is embodied to complement the holding contour (7) of the capsule storage unit (1) embodied as a hook, so that the capsule storage unit (1) is held on the automatic coffee machine (8) by means of the hook engaging into the channel (9).

2. Automatic coffee machine (8) according to claim 1, **characterised in that** the two limbs (5, 6) do not touch above the entire height of the capsule storage unit (1) at their free ends and as a result enable an observation slot (12) on the coffee capsules (2) stored in the coffee storage unit (1).

3. Automatic coffee machine (8) according to claim 1 or 2, **characterised in that** the housing (3) is embodied from metal, in particular from stainless steel or from aluminium.

4. Automatic coffee machine (8) according to one of claims 1 to 3, **characterised in that** the housing (3) has a base (10) which rises away from the rear (4) or has a chamfer (11).

## Revendications

1. Machine à café automatique (8) avec au moins un dispositif de stockage de capsules (1) pour le stockage de capsules de café (2) disposées l'une au-dessus de l'autre, avec un carter (3), avec un dos (4) et deux bras (5, 6) pliés qui en partent, qui constituent ensemble une section en forme de C et entourent les capsules de café (2), **caractérisée en ce que** les deux bras (5, 6) se rétrécissent vers le bas en direction du dos (4), de sorte que la capsule respectivement la plus basse (2) peut être retirée du dispositif de stockage de capsules (1), tandis que les capsules de café (2) situées au-dessus sont encore retenues par les deux bras (5, 6) dans le carter (3) et **en ce qu'**un profil de retenue (7) pour la fixation du dispositif de stockage de capsules (1) à la machine à café automatique (8) est disposé en une extrémité supérieure du dos (4), dans laquelle la machine à café automatique (8) présente, dans la zone périphérique supérieure, un canal (9) au moins partiellement périphérique, exécuté de façon complémentaire au profil de retenue (7) du dispositif de stockage de capsules exécuté sous forme de crochet, de sorte que le dispositif de stockage de capsules (1) est maintenu sur la machine à café automatique (8) par un engrènement du crochet dans le canal (9).

2. Machine à café automatique (8) selon la revendication 1, **caractérisée en ce que** les deux bras (5, 6) ne se touchent pas en leurs extrémités libres sur toute la hauteur du dispositif de stockage de capsules (1) et permettent ce faisant une fente de vision (12) sur les capsules de café (2) stockées dans le dispositif de stockage de capsules (1).

3. Machine à café automatique (8) selon la revendication 1 ou 2, **caractérisée en ce que** le carter (3) est exécuté en métal, en particulier en acier inoxydable ou en aluminium.

4. Machine à café automatique (8) selon l'une des revendications 1 à 3, **caractérisée en ce que** le carter (3) présente un fond (10) qui s'accroît à l'écart du dos (4) ou présente un biais (11).
